# EUROPÄISCHE PATENTSCHRIFT

(11) **EP 0 671 297 B1**
(45) Veröffentlichungstag und Bekanntmachung des Hinweises auf die Patenterteilung: **06.05.1998**
(21) Anmeldenummer: 95101751.6
(22) Anmeldetag: 09.02.1995
(51) Int. Cl.: B60R 21/20

(54) **Aufprallschutzeinrichtung für einen Insassen eines Kraftfahrzeuges**
Crash protecting device for a motor vehicle occupant
Dispositif de protection en cas d'accident pour un occupant de véhicule automobile

(30) Priorität: 10.03.1994 DE 4408037
(43) Veröffentlichungstag der Anmeldung: 13.09.1995
(73) Patentinhaber: Dr.Ing.h.c. F. Porsche Aktiengesellschaft, 70435 Stuttgart (DE)
(72) Erfinder: Boegge, Herbert, D-75446 Wiernsheim (DE)

(56) Entgegenhaltungen:
- EP-A- 0 358 230
- DE-A- 2 043 255
- GB-A- 2 264 905
- PATENT ABSTRACTS OF JAPAN vol. 018 no. 072 (M-1555) ,7.Februar 1994 & JP-A-05 286401 (MAZDA MOTOR CORP) 2.November 1993,

## Beschreibung

Die Erfindung betrifft eine Aufprallschutzeinrichtung für einen Insassen eines Kraftfahrzeuges gemäß dem Oberbegriff des Patentanspruches 1.

Bei einer bekannten Aufprallschutzeinrichtung der eingangs genannten Gattung (EP 0 415 362 A2) ist ein vorgefertiger Airbagmodul, bestehend aus einem Gehäuse, einem zusammengefalteten, aufblasbaren Gassack und einer Aufblaseinrichtung an zwei an einem Querträger angeschweißten Haltern angeschraubt.

Nach dem Einsetzen und Befestigen des Airbagmoduls wird in einem weiteren Arbeitsgang der zweiteilig ausgebildete Deckel zum Verschließen der Ausnehmung des Armaturenbretts montiert, wofür am Gehäuse zusätzliche Halter vorgesehen sind.

Die getrennte Montage von Airbagmodul und Deckel verursacht einen beträchtlichen Zeit- und Kostenaufwand. Ferner muß der Deckel am Gehäuse des Airbagmoduls sorgfältig justiert werden, damit ein gleichbleibender Fugenverlauf zwischen Deckel und Armaturenbrett erzielt wird.

Die DE-A-20 43 255 behandelt eine Aufprallschutzeinrichtung für einen Insassen eines Kraftfahrzeuges, die ein vorgefertigtes in eine Ausnehmung eines Armaturenbrettes eingesetztes Airbagmodul umfaßt, das im wesentlichen aus einem Gehäuse, einem zusammengefalteten, aufblasbaren Gassack und einer Aufblaseinrichtungn für den Gassack besteht. Die Aufblaseinrichtung setzt sich aus einem im Gehäuse angeordneten Diffusor und einem außerhalb des Gehäuses angeordneten Reservoir zusammen. Das Reservoir ist mittels zweier Hafer an einem weiteren, am Gehäuse angebrachten Halter befestigt, wobei örtlich abgestellte, nach unten ragende Ansätze der beiden Halter sich an seitlichen Wänden eines fahrzeugfesten Querträgers abstützen und an diesem mittels Befestigungsschrauben in Lage gehalten sind. Die dem Insassen zugekehrte Seite des Gehäuses ist mittels eines Deckels verschlossen, wobei der Deckel fest mit dem Gehäuse des Airbagmoduls verbunden ist. Die Aufprallschutzeinrichtung weist einen aufwendigen Aufbau auf und ist sowohl an einem aufbauseitigen Querträger als auch am Armaturenbrett mittels Befestigungsschrauben festlegbar.

Aus der JP-A-52 86 401 geht eine Befestigung eines Airbagmoduls an einem Querträger eines Armaturenbretts hervor, wobei von unten ein etwa U-förmig profilierter Halter auf den Querträger aufgeschoben und mit der Unterseite des Airbagmodulgehäuses verschraubt wird. Außerdem werden von oben C-förmig profilierte Fixierelemente auf den Querträger aufgesetzt, wobei die Fixierelemente in das Innere des U-förmigen Halters hineinragen und sich an den aufrechten Seitenwänden abstützen. Die Fixierelemente sind mittels etwa horizontal ausgerichteter Befestigungsschrauben mit dem Halter und dem Querträger fest verbunden.

Aufgabe der Erfindung ist es, eine Aufprallschutzeinrichtung der eingangs genannten Gattung so weiterzubilden, daß sie schnell und kostengünstig im Fahrzeug montierbar ist und daß Einbau- und Fertigungstoleranzen bei der Montage in einfacher Weise ausgleichbar sind.

Erfindungsgemäß wird diese Aufgabe durch die Merkmale des Anspruchs 1 gelöst. Weitere, die Erfindung in vorteilhafter Weise ausgestaltende Merkmale beinhalten die Unteransprüche.

Die mit der Erfindung hauptsächlich erzielten Vorteile sind darin zu sehen, daß durch die schwenkbewegliche Verbindung von Airbagmodul und Deckel und durch die am Airbagmodul angeordneten Halter ein vorgefertigtes Bauteil geschaffen wird, das schnell und in einfacher Weise in die Ausnehmung des Armaturenbrettes eingesetzt und über die am Airbagmodul angebrachten Halter auf den Querträger aufgeschoben wird und sich über die am Halter vorgesehenen Einstellelemente selbsttätig justiert.

Die Halter, die Einstellelemente und die querverlaufende Profilschiene werden durch Strangpreßprofilteile aus einer Leichtmetallegierung gebildet und sind einfach und kostengünstig herstellbar.

Die über querverlaufende, schwalbenschwanzähnliche Führungen mit dem Halter zusammenwirkende Einstellelemente bewirken, daß der Airbagmodul in definiertem Umfang in Querrichtung bewegbar und zudem um einen gewissen Betrag in Höhenrichtung schwenkbar ist, da die Aufnahmen der Einstellelemente und die korrespondierenden Fußabschnitte des Halters bogenförmig ausgebildet sind.

Die Einstellelemente sind bewegbar, jedoch unverlierbar mit Fußabschnitten des Halters verbunden. Ferner sind die Fußabschnitte des Halters - in Längsrichtung gesehen - schmäler ausgebildet als die Aufnahmen an den Einstellelementen.

Ein innerhalb der Konsole angebrachtes Stützrohr dient zur Versteifung der Konsole und nimmt die Befestigungsschraube in sich auf.

Ein Ausführungsbeispiel der Erfindung ist in der Zeichnung dargestellt und wird im folgenden näher erläutert.

Es zeigt
- Fig. 1: eine Ansicht vom Fahrgastraum aus auf ein Armaturenbrett mit einer Aufprallschutzeinrichtung für einen Insassen,
- Fig. 2: einen Schnitt nach der Linie II-II der Fig. 1 in größerem Maßstab,

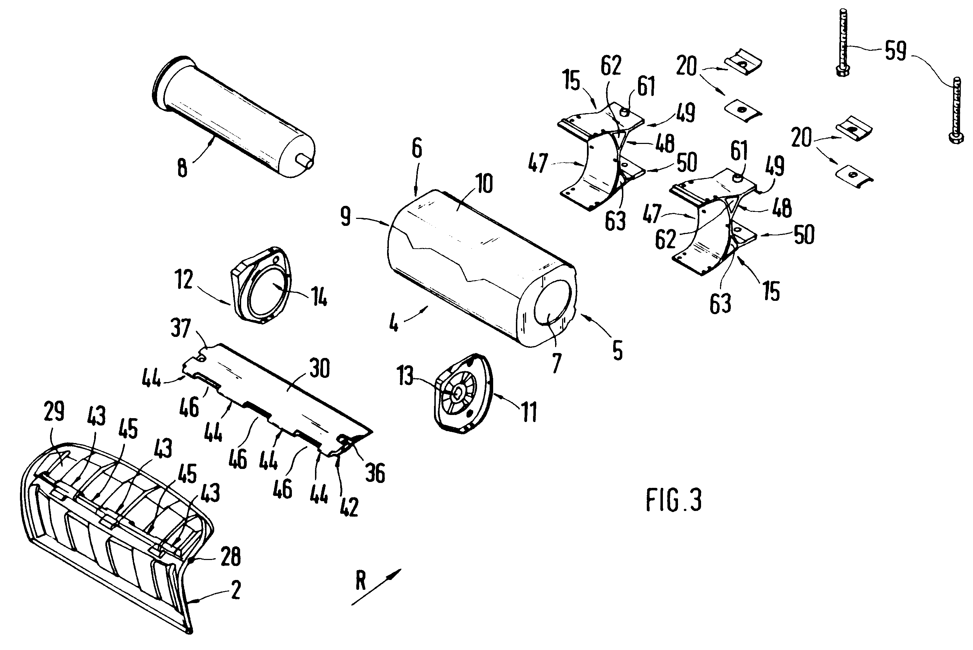

- Fig. 3: die wesentlichen Bauteile der Airbaganordnung und des Deckels in Explosionsdarstellung,

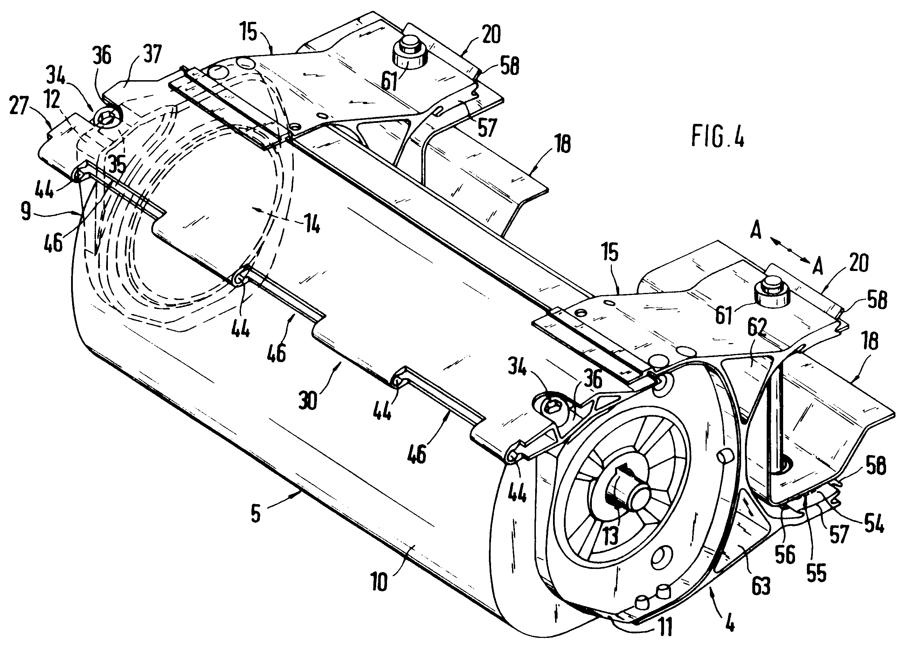

- Fig. 4: eine perspektivische Ansicht der Aufprallschutzeinrichtung in Pfeilrichtung R der Fig. 3 ohne den Deckel und den aufbauseitigen Querträger.

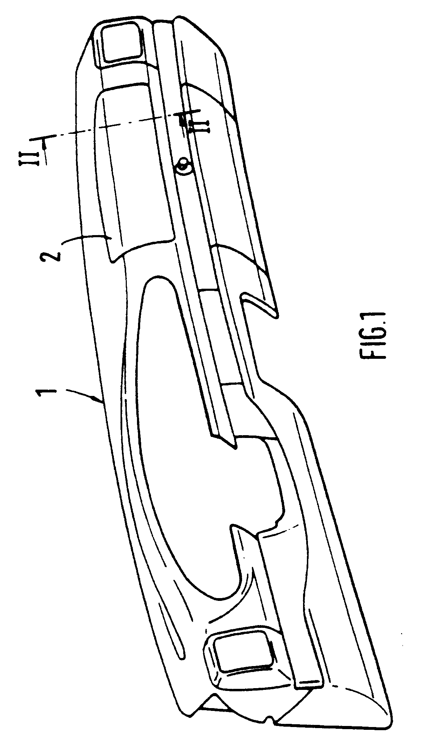

Das in Fig. 1 dargestellte Armaturenbrett 1 weist beifahrerseitig eine mittels eines Deckels 2 verschließbare Ausnehmung 3 auf, in der eine Aufprallschutzeinrichtung 4 (Airbag) für einen Insassen eines Kraftfahrzeuges angeordnet ist.

Die Aufprallschutzeinrichtung 4 umfaßt einen außerhalb des Fahrzeuges zu einer vormontierten, funktionsfähigen Baueinheit zusammengesetzten Airbagmodul 5.

Der Airbagmodul 5 besteht im wesentlichen aus einem Gehäuse 6, einem aufblasbaren Gassack 7 und einer Aufblaseinrichtung 8.

Die Aufblaseinrichtung 8 wird im Ausführungsbeispiel durch einen Röhrengenerator gebildet, der durch eine offene Seite 9 des rohrförmigen Gehäuses 6 eingeschoben wird.

Der Zusammengefaltete Gassack 7 ist in nicht näher dargestellter Weise mit einem Halterungsabschnitt um das Gehäuse 6 herumgeführt und durch eine flexible Abdeckung 10 verkleidet. An der flexiblen Abdeckung 10 sind örtlich nicht näher gezeigte, lösbare Verschlüsse vorgesehen, die sich beim Entfalten des Gassackes 7 selbsttätig lösen, so daß der Gassack 7 in seine aufgeblasene Funktionsstellung bewegbar ist. Ferner umfaßt der Airbagmodul 5 zwei seitliche Deckelteile 11, 12.

Am Deckelteil 12 ist die Ausblaseinrichtung 8 in einer Schlitzöffnung 13 verdrehfest gehalten, wogegen das andere Deckelteil 12 eine zylindrische Ausnehmung 14 zum Hindurchführen der Aufblaseinrichtung 8 aufweist.

Der Airbagmodul 5 ist mittels zweier - in Querrichtung gesehen - mit Abstand zueinander angeordneter Halter 15 an einem aufbauseitigen Querträger 16 befestigt. Der Querträger 16 wird im Ausführungsbeispiel durch einen etwa in Höhe der Ausnehmung 3 verlaufendes Tragrohr 17 gebildet, das - in Fahrzeuglängsrichtung gesehen - zwischen einer Stirnwand des Aufbaues und dem Armaturenbrett 1 verläuft und über plattenförmige Endbereiche an nicht näher dargestellte aufrechte Säulen des Fahrzeuges angeschlossen ist. Die beiden Halter 15 sind an seitlich außenliegenden Bereichen des Airbagmoduls 5 angeordnet. Im Bereich der am Airbagmodul 5 befestigten Halter 15 sind am Tragrohr 17 jeweils Konsolen 18 angebracht, die durch profilierte Blechpreßteile gebildet werden. Die Konsolen 18 sind mit dem Tragrohr 17 verschweißt und sind etwas breiter als die Hafer 15. Erfindungsgemäß ist der die Ausnehmung 3 verschließende Deckel 2 schwenkbeweglich mit dem Airbagmodul 5 verbunden, wobei Airbagmodul 5, Deckel 2 und Halter 15 eine vorgefertigte Baueinheit 19 bilden.

Bei der Montage der Baueinheit 19 werden die Halter 15 auf den Querträger 16 aufgeschoben und umgreifen diesen abschnittsweise. Zwischen den Haltern 15 und dem Querträger 16 sind bewegliche Einstellelemente 20 angeordnet, die eine Relativbewegung zwischen der Baueinheit 19 und dem Einstellelement 20 bzw. dem Querträger 16 gewährleisten.

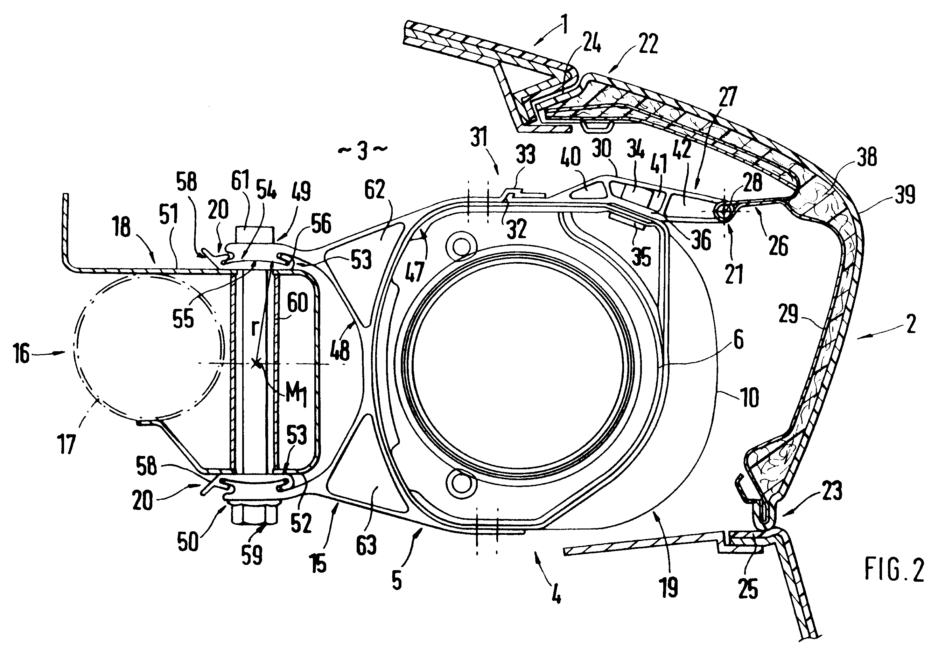

Der Deckel 2 ist lediglich über ein querverlaufendes, etwa horizontal ausgerichtetes Scharnier 21 mit dem Airbagmodul 5 verbunden (Fig. 2)

Das Scharnier 21 ist entfernt von einem oberen Randbereich 22 und einem unteren Randbereich 23 des Deckels 2 angeordnet und verläuft etwa in Höhe der Oberkante des Airbagmoduls 5.

Der obere, annähernd horizontal ausgerichtete obere Randbereich 22 des Deckels 2 verjüngt sich in Richtung Armaturenbrett 1 und ist in einer korrespondierenden querverlaufenden Rinne 24 des Armaturenbretts 1 zentrierend aufgenommen. Der untere Randbereich 23 des Deckels 2 liegt an einem etwa rechtwinkelig zum Deckel 2 verlaufenden Wandabschnitt 25 des Armaturenbretts 1 auf.

Das Scharnier 21 besteht aus Scharnierarmen 26, 27 und einem querverlaufenden, etwa horizontal ausgerichteten Scharnierstift 28.

Der deckelseitige Scharnierarm 26 ist einstückig mit einem Trägerblech 29 des Deckels 2 ausgebildet, wogegen der am Airbagmodul 5 befestigte Scharnierarm 27 durch eine querverlaufende, etwa horizontal gerichtete Profilschiene 30 gebildet wird, die mit den seitlichen Deckelteilen 11, 12 und den beiden Haltern 15 fest verbunden ist.

Zwischen der Profilschiene 30 und jedem Halter 15 ist eine formschlüssige Verbindung 31 vorgesehen, wobei ein nach oben gerichteter, schrägverlaufender Steg 32 der Profilschiene 30 in eine Nut 33 des darüberliegenden Halters 15 eingreift (Fig. 2).

Die Profilschiene 30 ist an beiden seitlichen Enden über je eine Schraube 34 mit dem darunterliegenden Deckelteil 11, 12 verbunden.

Die Schrauben 34 sind von oben in Gewindemuttern 35 der Deckelteile 11, 12 eingedreht, wobei der Schraubenkopf an einer unteren Wand 36 der Profilschiene 30 aufliegt. Die obere Wand 37 der Profilschiene 30 ist im Bereich der Schrauben 34 örtlich ausgespart.

Der Deckel 2 besteht aus dem Trägerteil 29, einer Schaumlage 38 und einer Bezugsschicht 39. Die Profilschiene 30 weist mehrere aneinandergesetzte, querverlaufende Hohlprofilabschnitte 40, 41, 42 auf.

Am Deckel 2 und am Hohlprofilabschnitt 42 der Profilschiene 30 sind abwechselnd Aufnahmen 43, 44 und ausgesparte Bereiche 45, 46 vorgesehen, wobei der querverlaufende Scharnierstift 28 durch die Aufnahmen 43, 44 des Deckels 2 und der Profilschiene 30 hindurchgeführt ist.

Jeder Halter 15 weist einen ersten Aufnahmeabschnitt 47 auf, der einen Teilbereich des Airbagmoduls 5 formschlüssig umgreift. Im Bereich des ersten Aufnahmeabschnitts 47 ist der Halter 15 durch Schrauben oder Niete fest mit dem angrenzenden Deckelteil 11 bzw. 12 verbunden.

Ferner weist jeder Halter 15 auf der dem Airbagmodul 5 abgekehrten Seite einen zweiten Aufnahmeabschnitt 48 auf, der den Querträger 16 abschnittsweise umgreift, wobei an gegenüberliegenden Endbereichen 49,50 des zweiten Aufnahmeabschnitts 48 die beweglichen Einstellelemente 20 angeordnet sind, die sich an Anlageflächen 51, 52 des Querträgers 16 abstützen.

Die Anlageflächen 51, 52 können entweder direkt am Querträger 16 ausgebildet sein oder wie im Ausführungsbeispiel an den Konsolen 18. Gemäß Fig. 2 sind die Anlageflächen 51, 52 parallel zueinander ausgerichtet und verlaufen annähernd horizontal. Zwischen den beiden Aufnahmeabschnitten 47, 48 sind am Halter 15 übereinanderliegende, etwa dreieckförmige hohlkammerartige Stützabschnitte 62, 63 vorgesehen.

Die Einstellelemente 20 wirken über querverlaufende,
schwalbenschwanzähnliche Führungen 53 mit den oberen Endbereichen 49 und den unteren Endbereichen 50 der zweiten Aufnahmeabschnitte 48 der Halter 15 zusammen, wobei die Einstellelemente 20 relativbeweglich an den Haltern 15 angebracht sind.

Die Einstellelemente 20 weisen eine geringere Breite auf als die Halter 15 bzw. die Konsolen 18. Darüber hinaus sind die Einstellelemente 20 um einen definierten Betrag in Querrichtung A-A gegenüber dem Halter 15 bewegbar und zusätzlich gegen seitliches Herunterfallen gesichert.

Jedes Einstellelement 20 weist auf der dem Halter 15 zugekehrten Seite eine querverlaufende Aufnahme 54 mit einem Grund 55 und zwei seitlichen Aufnahmenuten 56 auf, wobei die Aufnahme 54 mit einem korrespondierend ausgebildeten Fußabschnitt 57 des angrenzenden Endbereiches 49, 50 des zweiten Aufnahmeabschnittes 48 verschiebbar in Wirkverbindung steht. Der Fußabschnitt 57 greift in die Aufnahme 54 ein und ist schmäler ausgebildet als die Aufnahme 54.

Durch die bogenförmige Gestaltung des Grundes 55 der Aufnahme 54 und des korrespondierenden Fußabschnittes 57 des Halters 15 wird eine definierte Schwenkbewegung des Airbagmoduls 5 und der daran befestigten Halter 15 gewährleistet, so daß eine Relativbewegung in Höhenrichtung gegenüber dem feststehenden Querträger 16 gegeben ist. Gemäß Fig. 2 ist der Grund 55 und die dem Grund 55 zugekehrte Seite des Fußabschnittes 57 radienförmig ausgebildet (Radius R um Mittelpunkt M1).

Die Einstellelemente 20 weisen auf der der Konsole 18 zugekehrten Seite jeweils einen schrägverlaufenden Einführsteg 58 auf, wobei durch die gegenüberliegenden Einführstege 58 das Aufschieben der Halter 15 auf die Konsolen 18 erleichtert wird.

Zur Befestigung der vorgefertigten Baueinheit 19 am Querträger 16 ist im Bereich jeden Halters 15 eine aufrechte Befestigungsschraube 59 vorgesehen, die von unten her durch Öffnungen des Halters 15, der Einstellelemente 20, der Konsolen 18 und durch ein innerhalb der Konsole 18 angeordnetes Stützrohr 60 hindurchgeführt und in eine an der Oberseite des Halters 15 angebrachte Gewindemutter 61 eingedreht ist. Die Gewindemutter 61 kann als Schweißmutter oder Einpreßmutter ausgebildet sein.

Die Halter 15, die Profilschiene 30 und die Einstellelemente 20 werden vorzugsweise durch Strangpreßprofilteile aus einer Leichtmetallegierung gebildet

Beim Auslösen des Airbags wird lediglich der Unterhalb des Scharniers 21 liegende aufrechte Abschnitt des Deckels 2 durch den aufgeblasenen Gassack 7 nach oben hin verschwenkt, wogegen der obere Randbereich 22 des Deckels 2 in Eingriff mit der korrespondierenden Rinne 24 des Armaturenbretts 1 verbleibt.

## Patentansprüche

1. Aufprallschutzeinrichtung (4) für einen Insassen eines Kraftfahrzeuges, die ein vorgefertigtes, in eine Ausnehmung (3) eines Armaturenbrettes (1) eingesetztes Airbagmodul (5) umfaßt, das im wesentlichen aus einem Gehäuse (6), einem zusammengefalteten, aufblasbaren Gassack (7) und einer Aufblaseinrichtung (8) für den Gassack (7) besteht, wobei das Airbagmodul (5) zusammen mit am Airbagmodul (5) angebrachten Haltern (15) und einem die Ausnehmung (3) verschließenden Deckel (2) eine vorgefertigte Baueinheit (19) bildet und die auf einen aufbauseitigen Querträger (16) aufgesetzten Halter (15) über Befestigungsschrauben (59) mit dem Querträger (16) verbunden sind, **dadurch gekennzeichnet,** daß der lediglich über ein querverlaufendes, etwa horizontal ausgerichtetes Scharnier (21) drehbar mit dem Airbagmodul (5) verbundene Deckel (2) mit einem oberen Randbereich (22) in einer querverlaufenden Rinne (24) des Armaturenbretts (1) zentrierend aufgenommen ist, und daß zur Erzielung einer definierten Schwenkbewegung des Airbagmoduls (5) in Höhenrichtung an einem, den Querträger (16) zumindest abschnittsweise umgreifenden zweiten Aufnahmeabschnitt (48) der Halter (15) an gegenüberliegenden Endbereichen (49, 50) jeweils bewegliche Einstellelemente (20) angeordnet sind, die sich an benachbarten Anlageflächen (51, 52) des Querträgers (16) abstützen und über querverlaufende, bogenförmig gestaltete, schwalbenschwanzähnliche Führungen (53) mit oberen und unteren Endbereichen (49, 50) der Halter (15) relativbeweglich zusammenwirken und daß die Fixierung der vorgefertigten Baueinheit (19) am Querträger (16) durch aufrechte Befestigungsschrauben (59) erfolgt.

2. Aufprallschutzeinrichtung nach Anspruch 1, **dadurch gekennzeichnet,** daß das Scharnier (21) entfernt von einem oberen und einem unteren Randbereich (22, 23) des Deckels (2) etwa in Höhe der Oberkante des Airbagmoduls (5) vorgesehen ist.

3. Aufprallschutzeinrichtung nach den Ansprüchen 1 und 2, **dadurch gekennzeichnet,** daß sich der obere Randbereich (22) des Deckels (2) zum Armaturenbrett (1) hin verjüngt und der untere Randbereich (23) des Deckels (2) auf einem etwa rechtwinkelig dazu verlaufenden Wandabschnitt (25) des Armaturenbretts (1) aufliegt.

4. Aufprallschutzeinrichtung nach den Ansprüchen 1 bis 3, **dadurch gekennzeichnet,** daß ein deckelseitiger Scharnierarm (26) des Scharniers (21) einstückig mit einem Trägerblech (29) des Deckels (2) ausgebildet ist, wogegen der am Airbagmodul (5) befestigte Scharnierarm (27) durch eine querverlaufende Profilschiene (30) gebildet wird, die mit seitlichen Deckelteilen (11, 12) und den beiden Haltern (15) verbunden ist.

5. Aufprallschutzeinrichtung nach Anspruch 4, **dadurch gekennzeichet,** daß die Profilschiene (30) mehrere aneinandergesetzte, sich in Querrichtung erstreckende Hohlprofilabschnitte (40, 41, 42) aufweist und daß an der Profilschiene (30) und am Deckel (2) abwechselnd Aufnahmen (43, 44) und ausgesparte Bereiche (45, 46) vorgesehen sind, wobei ein querverlaufender Scharnierstift (28) durch die Aufnahmen (43, 44) des Deckels (2) und der Profilschiene (30) hindurchgeführt ist.

6. Aufprallschutzeinrichtung nach Anspruch 1, **dadurch gekennzeichnet,** daß jeder Halter (15) einen ersten Aufnahmeabschnitt (47) aufweist, der einen Teilbereich des Airbagmoduls (5) formschlüssig umgreift und daß jeder Halter (15) im Bereich des ersten Aufnahmeabschnittes (47) mit dem angrenzenden seitlichen Deckelteil (11, 12) fest verbunden ist.

7. Aufprallschutzeinrichtung nach einem oder mehreren der vorangegangenen Ansprüche, **dadurch gekennzeichnet,** daß der Querträger (16) durch ein Tragrohr (17) gebildet wird, das an seinen beiden außenliegenden Enden an aufrechte Säulen des Aufbaues angeschlossen ist und daß amTragrohr (17) im Bereich der Halter (15) des Airbagmoduls (5) vorstehende Konsolen (18) angebracht sind, die parallel zueinander ausgerichtete obere und untere Anlageflächen (51, 52) aufweisen, auf denen die Einstellelemente (20) aufliegen.

8. Aufprallschutzeinrichtung nach den Ansprüchen 1 bis 7, **dadurch gekennzeichnet,** daß die am Halter (15) angebrachten Einstellelemente (20) einen definierten Betrag in Querrichtung (A-A) gegenüber dem Halter (15) bewegbar und gegen seitliches Herunterfallen gesichert sind.

9. Aufprallschutzeinrichtung nach einem oder mehreren der vorangegangenen Ansprüche, **dadurch gekennzeichnet,** daß jedes Einstellelement (20) auf der dem Halter (15) zugekehrten Seite eine querverlaufende Aufnahme (54) mit einem bogenförmig ausgebildeten Grund (55) und zwei seitlichen Aufnahmen (56) unten aufweist, die mit einem korrespondierend ausgebildeten Fußabschnitt (57) des angrenzenden Endbereiches (49, 50) des zweiten Aufnahmeabschnittes (48) in Wirkverbindung stehen, wobei der Fußabschnitt (57) des Halters (15) schmäler ausgebildet ist als die Aufnahme (54) und daß durch die bogenförmige Ausbildung vom Fußabschnitt (57) und Grund (55) eine definierte Schwenkbewegung des Airbagmoduls (5) relativ zum Querträger (16) gewährleistet ist.

10. Aufprallschutzeinrichtung nach einem oder mehren der vorangegangenen Ansprüche, **dadurch gekennzeichnet,** daß zur Befestigung der vorgefertigten Baueinheit (19) am Querträger (16) im Bereich jeden Halters (15) die etwa senkrecht liegende Befestigungsschraube (59) von unten durch Öffnungen des Halters (15), der Einstellelemente (20), der Konsolen (18) und durch ein innerhalb jeder Konsole (18) angeordnetes Stützrohr (60) hindurchgeführt und in eine an der Oberseite des Halters (15) angebrachte Gewindemutter (61) eingedreht ist.

11. Aufprallschutzeinrichtung nach einem oder mehreren der vorangegangenen Ansprüche, **dadurch gekennzeichnet,** daß die Halter (15) und/oder die Profilschiene (30) und/oder die Einstellelemente (20) durch Strangpreßprofilteile aus einer Leichtmetallegierung gebildet werden.

## Claims

1. An impact-protection device (4) for an occupant of a motor vehicle, which comprises a pre-fabricated airbag module (5) inserted in a recess (3) in a dashboard (1) and essentially comprising a housing (6), a folded-up, inflatable gas bag (7) and an inflation device (8) for the gas bag (7), wherein the airbag module (5), together with retaining means (15) attached to the said airbag module (5) and a cover (2) closing the recess (3), forms a pre-fabricated structural unit (19) and the retaining means (15) mounted on a transverse support (16) on the body are connected to the transverse support (16) by way of fastening bolts (59), **characterized in that** the cover (2), rotatably connected to the airbag module (5) merely by way of a transversely extending hinge (21) orientated substantially horizontally, is received with an upper edge area (22) in a centred manner in a transversely extending channel (24) in the dashboard (1), and, in order to obtain a defined pivoting movement of the airbag module (5) in the vertical direction, movable adjustment members (20) are arranged respectively at each of the opposite end areas (49, 50) of a second receiving portion (48) of the retaining means (15) engaging at least in part around the transverse support (16), the said movable adjustment members (20) being supported on adjacent abutment faces (51, 52) of the transverse support (16) and cooperating by relative movement with upper and lower end areas (49, 50) of the retaining means (15) by way of transversely extending dovetail-like guides (53) shaped in a curve, and the pre-fabricated structural unit (19) is fixed to the transverse support (16) by vertical fastening bolts (59).

2. An impact-protection device according to Claim 1, **characterized in that** the hinge (21) is provided substantially at the level of the upper edge of the airbag module (5) and remote from an upper and a lower edge area (22, 23) of the cover (2).

3. An impact-protection device according to Claims 1 and 2, **characterized in that** the upper edge area (22) of the cover (2) is inwardly tapered towards the dashboard (1), and the lower edge area (23) of the cover (2) rests on a wall portion (25) of the dashboard (1) extending at a right angle angle thereto.

4. An impact-protection device according to Claims 1 to 3, **characterized in that** an arm (26) of the hinge (21) on the cover is formed integrally with a support plate (29) of the cover (2), whereas the hinge arm (27) secured to the airbag module (5) is formed by a transversely extending profiled rail (30) connected to lateral parts (11, 12) of the cover and to the two retaining means (15).

5. An impact-protection device according to Claim 4, **characterized in that** the profiled rail (30) comprises a plurality of mutually adjacent hollow-profiled portions (40, 41, 42) extending in the transverse direction, and receiving means (43, 44) and recessed areas (45, 46) are provided in an alternating manner on the profiled rail (30) and on the cover (2), wherein a transversely extending hinge pin (28) passes through the receiving means (43, 44) of the cover (2) and the profiled rail (30).

6. An impact-protection device according to Claim 1, **characterized in that** each retaining means (15) has a first receiving portion (47) which engages with positive locking around a partial area of the airbag module (5), and each retaining means (15) is securely connected to the adjacent lateral part (11, 12) of the cover in the region of the first receiving portion (47).

7. An impact-protection device according to one or more of the preceding Claims, **characterized in that** the transverse support (16) is formed by a support tube (17) which is attached at the two outer ends thereof to vertical columns of the body, and projecting brackets (18) are attached to the support tube (17) in the region of the retaining means (15) of the airbag module (5), the said projecting brackets (18) being provided with upper and lower abutment faces (51, 52) which are orientated parallel to each other and on which the adjustment members (20) rest.

8. An impact-protection device according to Claims 1 to 7, **characterized in that** the adjustment members (20) attached to the retaining means (15) are movable with respect to the said retaining means (15) by a defined amount in the transverse direction (**A-A**) and are prevented from falling down laterally.

9. An impact-protection device according to one or more of the preceding Claims, **characterized in that** on the side facing the retaining means (15) each adjustment member (20) has a transversely extending receiving means (54) with a base (55) shaped in a curve and two lateral receiving means (56) at the bottom, which are operatively connected to a correspondingly shaped foot portion (57) of the adjacent end area (49, 50) of the second receiving portion (48), wherein the foot portion (57) of the retaining means (15) is made narrower than the receiving means (54), and the arcuate design of the foot portion (57) and the base (55) ensure a defined pivoting movement of the airbag module (5) relative to the transverse support (16).

10. An impact-protection device according to one or more of the preceding Claims, **characterized in that**, in order to fasten the prefabricated structural unit (19) to the transverse support (16) in the region of each retaining means (15), the fastening bolt (59) orientated substantially vertically passes from below through openings in the retaining means (15), the adjustment members (20) [and] the brackets (18) and through a support tube (60) arranged inside each bracket (18) and is screwed into a threaded nut (61) attached to the top of the retaining means (15).

11. An impact-protection device according to one or more of the preceding Claims, **characterized in that** the retaining means (15) and/or the profiled rail (30) and/or the adjustment members (20) are formed by extruded profiled parts of a light-metal alloy.

## Revendications

1. Dispositif de protection en cas d'accident (4) pour un occupant d'un véhicule automobile, qui comprend un module à coussin à air (5) préfabriqué, inséré dans un évidement (3) ménagé dans un tableau de bord (1) et constitué essentiellement d'un boîtier (6), d'un sac à gaz gonflable (7) plié et un dispositif de gonflage (8) destiné au sac à gaz (7), le module à coussin d'air (5) constituant, conjointement avec des supports (15) montés sur le module à coussin d'air (5) et un couvercle (2) obturant l'évidement (3), un ensemble de construction (19) préfabriqué, et les supports (15), installés sur un support transversal (16) situés côté carrosserie, étant reliés au support transversal (16) par l'intermédiaire de vis de fixation (59), caractérisé en ce que le couvercle (2), qui est relié avec possibilité de rotation au module à coussin d'air (5) seulement par l'intermédiaire d'une charnière (21) s'étendant transversalement et orienté à peu près horizontalement, est logé avec centrage par une zone de bordure supérieure (22) dans une goulotte (24) s'étendant transversalement, appartenant au tableau de bord (1), et en ce que, pour obtenir un mouvement de pivotement défini du module à coussin d'air (5) dans la direction de la hauteur, sur une deuxième section de logement (48) entourant au moins en partie le support transversal (16), des supports (15) sont disposés sur des zones d'extrémité (49, 50), opposées chaque fois, des éléments de réglage (20) déplaçables, qui prennent appui sur des surfaces d'appui (51, 52) voisines du support transversal (16) et coopèrent, avec un déplacement relatif, par l'intermédiaire de guidages (53) en forme de queue d'aronde s'étendant transversalement et configurés de façon arquée, par des zones d'extrémité supérieure et inférieure (49, 50) des supports (15), et en ce que la fixation de l'ensemble de construction (19) préfabriqué sur le support transversal (16) s'effectue au moyen de vis de fixation (59) vertical.

2. Dispositif de protection en cas d'accident selon la revendication 1, caractérisé en ce que la charnière (21) est prévue à distance d'une zone supérieure et d'une zone inférieure (22, 23) du couvercle (2), à peu près au niveau de l'arête supérieure du module à coussin d'air (5).

3. Dispositif de protection en cas d'accident selon les revendications 1 et 2, caractérisé en ce que la zone de bordure supérieure (22) du couvercle (2) va en s'effilant en direction du tableau de bord (1) et la zone de bordure inférieure (23) du couvercle (2) repose sur une section de paroi (25), s'étendant à peu près à angle droit par rapport a celle-ci, du tableau de bord (1).

4. Dispositif de protection en cas d'accident selon les revendications 1 à 3, caractérisé en ce qu'un bras de charnière (26), situé côté couvercle et appartenant à la charnière (21à), est réalisé d'une seule pièce avec la tôle support (29) du couvercle (2), alors que, par contre, le bras de charnière (27) fixé sur le module à coussin d'air (5) est constitué par une glissière profilée (30) s'étendant transversalement, qui est reliée par des parties de couvercle latérales (11, 12) et les deux supports (15).

5. Dispositif de protection en cas d'accident selon la revendication 4, caractérisé en ce que la glissière profilée (30) présente plusieurs sections profilées creuses (40, 41, 42) placées les unes contre les autres, s'étendant dans la direction transversale, et en ce que sur la glissière profilée (30) et sur le couvercle (2) sont disposées en alternance des logements (42, 44) et des zones (45, 46) évidées, une tige de charnière (28), s'étendant transversalement, étant guidée à travers les logements (43, 44) du couvercle (2) et de la glissière profilée (30).

6. Dispositif de protection en cas d'accident selon la revendication 1, caractérisé en ce que chaque support (15) présente une première section de logement (47) qui entoure avec ajustement de forme une zone partielle du module à coussin d'air (5), et en ce que chaque support (15) est relié rigidement, dans la zone de la première section de logement (47), à la partie couvercle latérale (11, 12) limitrophe.

7. Dispositif de protection en cas d'accident selon l'une ou plusieurs des revendications précédentes, caractérisé en ce que le support transversal (16) est constitué par un tube support (17) qui est raccordé à ses deux extrémités extérieurs à des colonnes verticales appartenant à la carrosserie, et en ce que, sur le tube support (17), sont montés des consoles (18), faisant saille dans la zone des supports (15) du module à coussin d'air (5) et présentant des surfaces d'appui supérieures et inférieures (51, 52) orientées parallèlement l'une à l'autre et sur lesquelles reposent les éléments de réglages (20).

8. Dispositif de protection en cas d'accident selon les revendications 1 à 7, caractérisé en ce que les éléments de réglage (20) montés sur le support (15) sont déplaçables sur une distance définie dans la direction transversale (A-A) par rapport aux supports (15) et sont assurés contre toute chute latérale.

9. Dispositif de protection en cas d'accident selon l'une ou plusieurs des revendications précédentes, caractérisé en ce que chaque élément de réglage (20) présente, du côté tourné vers le support (15), un logement (54) s'étendant transversalement, comportant un fond (50) réalisé à une forme arquée et deux logements latéraux (56), qui sont reliés fonctionnellement par une partie formant pied (57) réalisé de manière correspondante et appartenant à la zone d'extrémité (49, 50) limitrophe de la deuxième section de logement (48), le pied (57) du support (15) étant de réalisation plus étroite que le logement (54), et en ce que, par la configuration à forme arquée du pied (57) et du fond (55), est assuré un mouvement pivotant défini du module à coussin d'air (5) par rapport au support transversal (16).

10. Dispositif de protection en cas d'accident selon l'une ou plusieurs des revendications précédentes, caractérisé en ce que pour assurer la fixation de l'ensemble de construction (19) préfabriqué sur le support transversal (16), dans la zone de chaque support (15) la vis de fixation (59) située à peu près verticalement est passée par le dessous en passant à travers des ouvertures ménagées dans le support (15), les éléments de réglage (20), les consoles (18) et à travers un tube d'appui (60) disposé à l'intérieur de chaque console (18) et est tournée dans un trou taraudé (61) monté sur la face supérieure du support (15).

11. Dispositif de protection en cas d'accident selon l'une ou plusieurs des revendications précédentes, caractérisé en ce que les supports (15) et/ou la glissière profilée (30) et/ou les éléments de réglage (20) sont constituées par des pièces profilées venant d'extrusion, réalisées en un alliage métallique léger.
